# FASCICULE DE BREVET EUROPEEN

(11) **EP 3 786 375 B1**
(45) Date de publication et mention de la délivrance du brevet: **22.12.2021**
(21) Numéro de dépôt: 20192012.1
(22) Date de dépôt: 20.08.2020
(51) Int. Cl.: E03D 1/30, E03D 1/32, F16K 31/26

(54) **ROBINET POUR RÉSERVOIR DE CHASSE D EAU**
HAHN FÜR WASSERSPÜLUNGSTANK
VALVE FOR A WATER FLUSHING TANK

(30) Priorité: 02.09.2019 FR 1909625
(43) Date de publication de la demande: 03.03.2021
(73) Titulaire: Wirquin Plastiques, 44470 Carquefou (FR)
(72) Inventeur: LE COËNT, Daniel, 44470 Carquefou (FR); RABESAOTRA, Paul, 44470 Carquefou (FR)
(74) Mandataire: Lequien, Philippe

(56) Documents cités:
- WO-A1-2016/015977
- WO-A1-2016/016203
- US-A- 1 637 592
- US-A1- 2017 002 555

## Description

Le domaine de l'invention est celui de la conception et de la fabrication des équipements sanitaires.

Plus précisément, l'invention concerne un robinet de remplissage d'un réservoir de chasse d'eau selon le préambule de la revendication 1.

Les blocs sanitaires comprennent généralement une cuvette et un réservoir de chasse d'eau surplombant la cuvette pour permettre de rincer et nettoyer la cuvette après utilisation.

Pour cela, un utilisateur actionne un dispositif de déclenchement de chasse d'eau qui vide le réservoir, l'eau étant alors dirigée vers la cuvette pour en chasser les matières éventuellement présentes, et la rincer.

Lorsque le réservoir est vide, ou quasiment, de l'eau est injectée dans le réservoir pour le remplir jusqu'à un niveau maximal prédéterminé et, ainsi, autoriser une future chasse d'eau.

Pour cela, les réservoirs comprennent généralement un robinet associé à un mécanisme d'arrêt automatique permettant d'arrêter l'écoulement d'eau lorsqu'un niveau maximal d'eau dans le réservoir est atteint.

Le robinet est couplé, directement ou indirectement à une canalisation d'eau d'un bâtiment.

Le mécanisme d'arrêt comprend généralement un flotteur mobile par rapport au robinet et associé à des moyens d'obturation.

Lors du remplissage, le flotteur, qui flotte à la surface de l'eau, remonte avec le niveau d'eau et entraîne les moyens d'obturation. Lorsque l'eau atteint son niveau maximal dans le réservoir, les moyens d'obturation obturent intégralement l'arrivée d'eau.

Comme tout remplissage d'un récipient par un liquide, ou quasiment, le remplissage d'un réservoir de chasse d'eau génère des nuisances sonores.

Une problématique de réduction du bruit des chasses d'eau a engendré la création de robinets de réservoirs de chasse d'eau peu bruyants.

De manière générale, ces robinets comprennent un corps destiné à être solidarisé au réservoir de chasse d'eau ;
- une tubulure d'entrée d'eau débouchant dans le corps ;
- une tubulure de sortie d'eau débouchant du corps, la tubulure de sortie d'eau présentant une ouverture de sortie.

Des robinets pour réservoir de chasse d'eau sont divulgués par US 1 637 592 A, WO 2016/016203 A1, WO 2016/015977 A1 et US 2017/002555 A1.

Pour limiter les nuisances sonores lors du remplissage du réservoir, la tubulure de sortie est noyée, au moins partiellement, dans la réserve d'eau du réservoir.

Plus précisément, l'ouverture de sortie, est située dans un niveau inférieur du réservoir d'eau, par exemple contre une paroi inférieure.

Ainsi, lors du remplissage du réservoir de chasse d'eau, l'eau qui entre dans le corps par la tubulure d'entrée d'eau et s'évacue dans le réservoir de chasse d'eau par l'ouverture de sortie de la tubulure de sortie d'eau, engendre un niveau sonore très faible, voire presque inaudible pour l'utilisateur.

En effet, le niveau d'eau monte au fur et à mesure du remplissage si bien que, dès le début du remplissage, ou quasiment, l'ouverture de sortie de la tubulure de sortie d'eau est immergée sous l'eau.

Ainsi, le remplissage est quasiment sans bruit puisqu'il n'y a pas d'éclaboussures ou de clapotis générés par l'eau provenant de la tubulure de sortie avec l'eau contenue dans le réservoir.

Selon certains besoins, il peut arriver qu'un siphonage des réseaux d'eau des bâtiments soit effectué. L'eau contenue dans les tuyaux est alors aspirée.

Lors de cette aspiration, l'eau contenue dans le réservoir de chasse d'eau peut être aspirée par la tubulure de sortie et rejetée dans les canalisations d'eau potable du bâtiment par la tubulure d'entrée d'eau.

Dans certains cas, l'eau contenue dans les réservoirs de chasse d'eau peut être mélangée avec des produits chimiques tels que des détergents ou ménagers par exemple.

Aussi, lorsque l'eau du réservoir de chasse d'eau est mélangée avec un produit chimique, celle-ci devient alors impropre à la consommation.

Or, lors d'un siphonage, l'eau est récupérée puis peut, le cas échéant, être réinjectée dans les canalisations d'eau du bâtiment.

Dès lors, l'eau et les produits chimiques qui étaient précédemment dans le réservoir de chasse d'eau peuvent se retrouver dans des canalisations menant à des points d'eau potable, par exemple des éviers de cuisine ou des lavabos de salle de bain, voire des équipements de douche.

L'eau, et surtout les produits chimiques qu'elle véhicule, présente alors un danger pour les utilisateurs puisqu'elle ne peut pas être bue ou même peut être toxique voire être nocive pour la santé.

Pour éviter cela, de nouvelles normes et de nouvelles règles sont apparues afin que, lorsqu'un siphonage se produit, l'eau présente dans le réservoir de chasse d'eau ne puisse être aspirée.

Une solution développée en ce sens réside en l'utilisation de clapets anti-retour ou de vannes unidirectionnelles permettant le remplissage du réservoir de chasse d'eau et empêchant le cheminement inverse de l'eau, c'est-à-dire le siphonage.

Toutefois, de tels systèmes peuvent se dégrader avec le temps, notamment à cause de la présence de calcaire, obligeant alors une maintenance régulière onéreuse.

Une autre solution qui a été développée et adoptée par les manufactures d'équipement sanitaire réside en la création de robinet dont l'ouverture de sortie de la tubulure de sortie d'eau est située à distance d'un niveau maximal d'eau dans le réservoir, c'est-à-dire hors de l'eau contenue dans le réservoir.

Cela se concrétise donc par une tubulure de sortie d'eau sans contact avec l'eau du réservoir, ou étant en toutes circonstances espacé de l'eau présente dans le réservoir (cet espace étant désigné par les termes anglo-saxons « air gap »).

De tels robinets comprennent classiquement un corps et une tête montée sur le corps. En revanche, ces robinets diffèrent de l'art antérieur connu en ce que la conduite de sortie débouche dans la tête latéralement ou par le dessus de celle-ci.

De tels robinets présentent alors généralement un encombrement plus importants que les robinets classiques de l'art antérieur. Notamment pour répondre aux contraintes de siphonage des canalisations, l'encombrement en hauteur est augmenté puisque la tubulure de sortie d'eau s'étend au-delà du corps du robinet, et même au-delà du chapeau.

Par ailleurs, l'écartement entre la sortie de l'eau et le niveau d'eau dans le réservoir présente un inconvénient majeur en termes d'émissions sonores produites.

En effet, lorsque l'eau s'écoulant depuis le robinet se déverse dans le réservoir de chasse d'eau en chutant de plusieurs centimètres, et impacte l'eau déjà présente dans le réservoir. Cet impact génère des éclaboussures et/ou un clapotis, et donc des nuisances sonores.

L'invention a notamment pour objectif de pallier les inconvénients de l'art antérieur.

Plus précisément, l'invention a pour objectif de proposer un robinet pour réservoir de chasse d'eau qui permette un remplissage dudit réservoir de chasse d'eau, tout en conservant un encombrement réduit, tout en respectant les critères anti-siphonage et notamment de conserver l'eau présente dans le réservoir en cas de siphonage des canalisations d'un bâtiment.

L'invention a également pour objectif de fournir un tel robinet qui permette un remplissage du réservoir de chasse d'eau de manière peu bruyante.

L'invention a en outre pour objectif de fournir un tel robinet qui soit simple d'installation et de maintenance.

Ces objectifs, ainsi que d'autres qui apparaîtront par la suite, sont atteints grâce à l'invention qui a pour objet un robinet pour réservoir de chasse d'eau, comprenant :
- un corps s'étendant selon un axe longitudinal, destiné à être monté verticalement dans un réservoir de chasse d'eau ;
- une tête prolongeant le corps et présentant une paroi périphérique ;
- un chapeau couvrant la tête, le chapeau s'étendant depuis la tête jusqu'à une paroi supérieure, et ménageant une zone technique logeant des moyens d'obturation du corps, ladite zone technique étant délimitée par une paroi interne à la paroi périphérique, s'ouvrant sur l'extérieur du chapeau ;
- une tubulure de sortie débouchant dans le chapeau pour extraire l'eau s'écoulant depuis le corps via la tête et le chapeau,
caractérisé en ce que le chapeau ménage un volume d'écoulement d'eau s'étendant entre la paroi périphérique, la paroi interne et la paroi supérieure, la tubulure de sortie débouchant dans le chapeau à l'intérieur du volume d'écoulement d'eau et s'étendant transversalement à l'axe longitudinal.

Ainsi, grâce à l'invention, on limite l'encombrement total du robinet. Ces robinets peuvent donc se loger dans des cuves de réservoirs à hauteur limitée, contrairement aux robinets de l'art antérieur.

En outre, ce robinet permet d'éviter toute aspiration de l'eau contenue dans la cuve en cas de siphonage des canalisations. Dès lors, si l'eau contenue dans la cuve est mélangée à un produit ménager, il n'y a aucun risque de mélange avec l'eau des canalisations en cas de siphonage.

Préférentiellement, la tubulure de sortie s'étend perpendiculairement à l'axe longitudinal.

Cela permet de limiter l'encombrement radial du robinet. En effet, lorsque vu de dessus, le robinet selon l'invention présente une largeur inférieure aux robinets de l'art antérieur. Le robinet selon l'invention peut notamment être considéré comme un robinet dit plat.

Avantageusement, le robinet comprend une cartouche amovible, montée à une extrémité libre de la tubulure de sortie, la cartouche amovible présentant une ouverture d'évacuation d'eau.

Cette cartouche amovible permet de contrôler la sortie d'eau et notamment, en cas d'entartrage par exemple, d'être changée indépendamment du reste du robinet.

Selon un avantage particulier, la cartouche amovible porte une cage présentant une section d'écoulement d'eau, la cage accueillant un organe poreux présentant une section coïncidente avec la section d'écoulement d'eau, la cage étant située à proximité de l'ouverture de la cartouche.

Une telle cage permet alors de contrôler le débit d'eau dans s'écoulant du robinet, au bénéfice de la réduction des nuisances sonores lors du remplissage de la cuve.

Selon un mode de réalisation préféré, la cartouche amovible est montée à rotation sur la tubulure de sortie.

Il est alors possible d'orienter le jet d'eau sortant du robinet en direction d'une paroi de la cuve, de sorte que l'eau ruisselle sur ladite paroi et ne génère que de faibles nuisances sonores lors du remplissage de la cuve.

Avantageusement, le robinet comprend une deuxième tubulure de sortie débouchant dans le chapeau à l'intérieur du volume d'écoulement d'eau et s'étendant transversalement à l'axe longitudinal.

La deuxième tubulure de sortie permet de modifier la configuration du robinet en fonction des contraintes techniques lors de son installation par exemple.

Toutefois, dans le cas où seule la rapidité de remplissage de la cuve compte, l'utilisation de deux tubulures de sortie permet d'augmenter la rapidité de remplissage de la cuve.

Selon un autre mode de réalisation avantageux, le robinet comprend un bouchon d'obturation obturant une extrémité libre de la deuxième tubulure de sortie.

Cela permet de confiner tout le débit d'eau vers la cartouche lorsqu'une seule tubulure de sortie n'est utilisée, notamment dans le but de limiter les nuisances sonores lors du remplissage.

Préférentiellement, la zone technique s'ouvre sur l'extérieur du chapeau entre les deux tubulures de sortie.

Cette configuration permet de limiter l'encombrement général du robinet, notamment en ce que toutes les parties du robinet faisant saillie de la tête sont regroupées.

Avantageusement, le bouchon d'obturation porte une tuyère d'éjection d'eau hors de la cuve.

Ainsi, en cas de trop plein de la cuve, l'eau provenant du robinet peut être directement évacuée dans la cuvette pour éviter un débordement de la cuve.

De préférence, les moyens d'obturation comprennent un bras monté à rotation par rapport à la paroi interne dans la zone technique, et s'étendant à l'extérieur du chapeau, le bras étant solidaire d'un flotteur.

De tels moyens d'obturation permettent ainsi d'arrêter de manière mécanique le remplissage de la cuve, en fonction d'un niveau d'eau souhaité dans la cuve.

L'invention concerne également une cuve pour WC formant un réservoir de chasse d'eau, caractérisée en ce qu'elle comprend un robinet selon l'une quelconque des revendications précédentes.

D'autres caractéristiques et avantages de l'invention apparaîtront plus clairement à la lecture de la description suivante de modes de réalisations préférentielles de l'invention, donnés à titre d'exemples illustratifs et non limitatifs, et des dessins annexés parmi lesquels :
[Fig. 1] est une vue en perspective partielle de dessus d'un robinet selon l'invention, selon un premier mode de réalisation ;
[Fig. 2] est une vue du robinet selon l'invention selon une variante de réalisation ;
[Fig. 3] est une vue en coupe transversale de dessus du robinet selon le premier mode de réalisation ;
[Fig. 4] est une vue en coupe longitudinale partielle selon le mode de réalisation premier ;
[Fig. 5] est une vue en perspective de dessus d'un robinet selon l'invention, selon un deuxième mode de réalisation ;
[Fig. 6] est une vue en coupe partielle selon un plan longitudinal d'un robinet selon l'invention, selon le deuxième mode de réalisation.

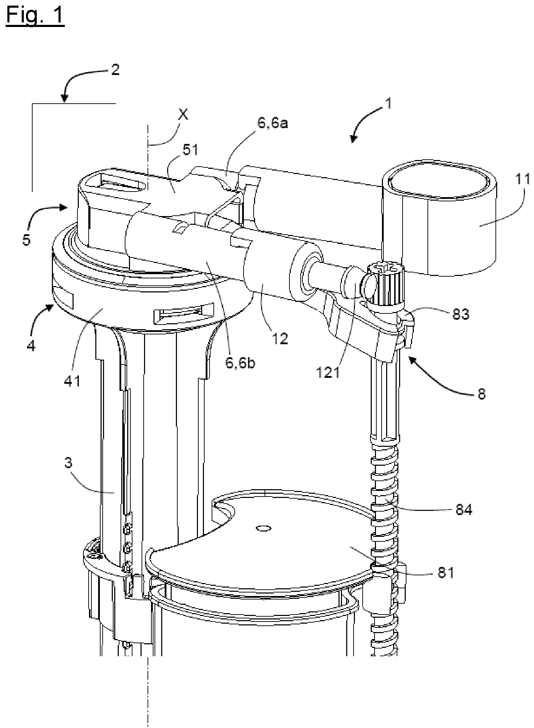

Tel qu'illustré sur les figures 1 à 6, un robinet 1 selon l'invention est destiné à être monté dans une cuve 2 pour WC formant un réservoir de chasse d'eau.

Le robinet 1 permet le remplissage de la cuve 2 pour le nettoyage de la cuvette des WC.

Le robinet 1 selon l'invention comprend :
- un corps 3 s'étendant selon un axe longitudinal X ;
- une tête 4 prolongeant le corps 3 ;
- un chapeau 5 couvrant la tête 4 ;
- une tubulure de sortie 6 débouchant dans le chapeau 5 pour permettre l'écoulement de l'eau hors du robinet 1, et s'étendant transversalement au corps 3.

Le corps 3 prend la forme d'un tube s'étendant selon l'axe longitudinal X et présente une entrée d'eau non visible sur les figures, permettant d'acheminer l'eau depuis une canalisation extérieure à la cuve 2 du WC jusqu'à la tubulure de sortie 6 pour le remplissage de la cuve 2.

Selon une première forme de réalisation, l'entrée d'eau s'étend dans le prolongement du corps 3, c'est-à-dire selon l'axe X.

Selon une deuxième forme de réalisation, l'entrée d'eau s'étend transversalement au corps 3, c'est-à-dire transversalement à l'axe X.

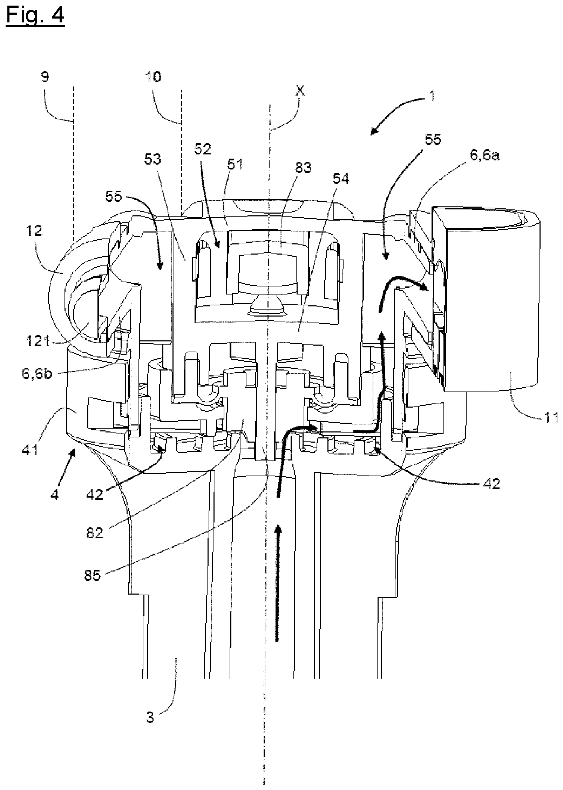

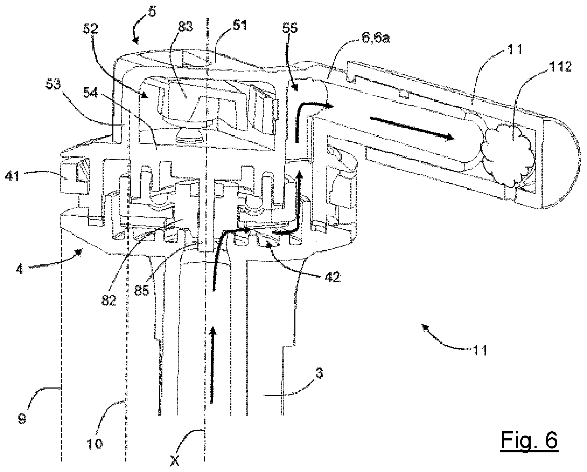

Tel qu'illustré sur les figures 4 et 6, la tête 4 et le corps 3 forment un ensemble monobloc.

En d'autres termes, le corps 3 s'étend jusqu'à un plan transversal 7 puis est prolongé par la tête 4 qui présente généralement des dimensions hors tout supérieures.

Plus précisément, le corps 3 et la tête 4 sont de section transversale sensiblement circulaire, le diamètre de la tête 4 étant alors supérieur au diamètre du corps 3.

La tête 4 présente une paroi périphérique 41 délimitant à l'intérieur un volume 42 dans lequel l'eau peut circuler.

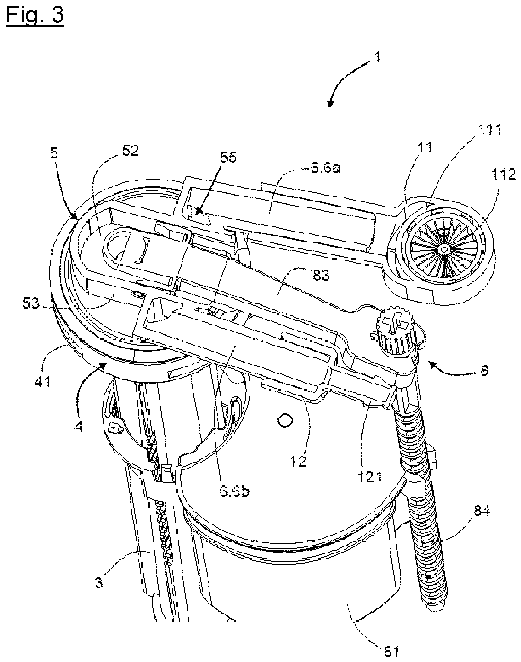

En référence aux figures 1 à 6, et plus particulièrement à la figure 3, le chapeau 5, qui couvre la tête 4, s'étend depuis celle-ci jusqu'à une paroi supérieure 51 et ménage une zone technique 52 logeant des moyens d'obturation 8 du corps 3.

Ladite zone technique 52 est délimitée par une paroi interne 53 à la paroi périphérique 41, et s'ouvre sur l'extérieur du chapeau 5.

La zone technique 52 présente en outre une paroi inférieure 54 permettant d'étanchéifier la zone technique 52 de l'eau circulant dans le robinet 1.

La paroi inférieure 54 présente cependant un passage 55 permettant le fonctionnement des moyens d'obturation 8, comme décrit ci-après.

Bien entendu, des moyens d'étanchéité, par exemple des joints, peuvent être prévus pour assurer à la fois le guidage en fonctionnement des moyens d'obturation 8, mais également empêcher que l'eau présente dans le volume s'écoulant dans le robinet 1 ne fuite au travers de la zone technique 52 et ne remplisse la cuve 2 de manière bruyante.

Tel qu'illustré sur les figures 4 et 6, le chapeau 5 ménage un volume d'écoulement d'eau 55 s'étendant entre la paroi périphérique 41 et la paroi interne 53 d'une part puis entre la tête 4 et la paroi supérieure 51 d'autre part.

La tubulure de sortie 6 débouche alors dans le chapeau 5 à l'intérieur du volume d'écoulement d'eau 55 tel que cela est illustré notamment sur la figure 3.

En référence aux figures 4 et 6, une ligne d'encombrement 9 radial de la tête 4 par rapport à l'axe longitudinal X et une ligne de largeur 10 de la zone technique 52 par rapport à l'axe longitudinal X sont illustrées.

Ainsi, il est possible de constater que la tubulure de sortie 6 débouche dans le volume d'écoulement d'eau 55 du chapeau 5, c'est-à-dire entre la paroi périphérique 41 de la tête 4 et la zone technique 52 ou, plus précisément, entre les deux lignes 9, 10 illustrées sur les figures 4 et 6.

Les moyens d'obturation 8 du corps 3 présentent :
- un flotteur 81 monté à translation sur le corps 3,
- un obturateur 82 mobile à l'intérieur de la tête 4 entre une position de passage dans laquelle l'obturateur 82 est écarté du corps 3 et une position d'obturation dans laquelle l'obturateur 82 bouche le corps 3, empêchant ainsi l'eau de s'écouler depuis le corps 3 jusqu'à la tête 4 ;
- un bras 83 monté à rotation sur la paroi interne 53 du chapeau 5, à l'intérieur de la zone technique 52, le bras 83 étant solidarisé à la fois au flotteur 81 et à l'obturateur 82.

Plus précisément, une tige 84 relie une première extrémité du bras 83 à l'obturateur 82 pour permettre le passage de ce dernier de sa position de passage à sa position d'obturation et inversement.

La tige 84 présente avantageusement un pas fileté permettant le réglage de la hauteur entre le flotteur 81 et le bras 83.

Ainsi, en vissant ou en dévissant la tige 84 par rapport au flotteur 81, il est possible de modifier l'instant d'obturation complète du corps 3 du robinet 1 en fonction de la quantité désirée d'eau dans la cuve 2.

Par ailleurs, à une seconde extrémité située hors de la zone technique 52, le bras 83 est relié au flotteur 81 via une tringle 85, de sorte que le mouvement du flotteur 81 en translation sur le corps 3 entraîne le mouvement du bras 83 en rotation par rapport à la paroi interne 53 du chapeau 5.

Plus particulièrement, lorsque le niveau d'eau monte dans la cuve 2, le flotteur 81 se déplace le long du corps 3 en direction de la tête 4.

La liaison entre le flotteur 81 et le bras 83, via la tringle 85, permet de faire pivoter le bras 83 qui agit alors sur la tige 84 pour déplacer l'obturateur 82 depuis sa position de passage vers sa position d'obturation.

Le passage de l'obturateur 82 de sa position de passage à sa position d'obturation se fait ainsi de manière douce, empêchant un arrêt brutal du remplissage de la cuve 2.

Par ailleurs, cela permet d'éviter des à-coups et des contraintes mécaniques trop importantes pour les moyens d'obturation 8.

Tel qu'illustré sur les figures 1 à 6, le robinet 1 selon l'invention présente deux tubulures de sortie 6 s'étendant transversalement par rapport au corps 3.

Plus précisément, les deux sorties sont sensiblement perpendiculaires à l'axe longitudinal X d'extension du corps 3.

Chaque tubulure de sortie 6 débouche dans le chapeau 5, et plus particulièrement dans le volume d'écoulement d'eau 55.

Les tubulures de sortie 6 sont avantageusement écartées l'une de l'autre et situées de part et d'autre d'un plan médian du chapeau 5, notamment un plan dans lequel pivote le bras 83 des moyens d'obturation 8.

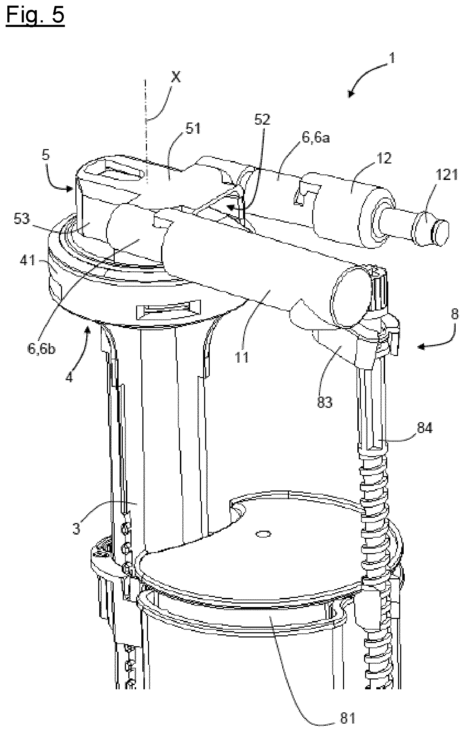

En référence aux figures 3 et 5, l'ouverture sur l'extérieur de la zone technique 52 est située entre les deux tubulures de sortie 6.

Selon un mode de réalisation préféré, les deux tubulures de sortie 6 forment entre elles un angle compris entre 10° et 15°.

Selon un autre mode de réalisation non représenté sur les figures, les deux tubulures de sortie forment entre elles un angle supérieur à 15° et pouvant aller jusqu'à un angle plat, c'est-à-dire de 180°

Selon les modes de réalisation illustrés sur les figures, la zone technique 52 forme, avec le débouché des tubulures de sortie 6, une forme sensiblement en T.

Comme cela est illustré sur les figures 1, 2, 3 et 5, une première tubulure de sortie 6a est équipée d'une cartouche amovible 11, la deuxième tubulure de sortie 6b étant équipée d'un bouchon d'obturation 12.

Tel qu'illustré sur les figures, le bouchon d'obturation 12 et la cartouche amovible 11 sont montés à une extrémité libre des tubulures de sortie 6, c'est-à-dire à une extrémité opposée au chapeau 5.

Le bouchon d'obturation 12 et la cartouche amovible 11 peuvent être disposés selon l'envie de l'utilisateur, ou selon les contraintes techniques, sur la première tubulure de sortie 6a ou sur la deuxième tubulure de sortie 6b.

Cela permet notamment d'adapter le robinet 1 aux différentes configurations de cuves existantes et plus particulièrement à la position de l'arrivée d'eau dans la cuve.

Grâce à leur caractéristique amovible, le bouchon d'obturation 12 et la cartouche amovible 11 peuvent être remplacés aisément en cas de défaillance ou de détérioration.

Le bouchon d'obturation 12, tel qu'illustré sur les figures 1, 2 et 5, comprend une tuyère d'éjection 121 permettant de relier une tubulure de surplus au robinet 1, tel qu'expliqué ci-après.

Grâce à la tubulure de surplus, lorsqu'un trop plein de remplissage de la cuve 2 est réalisé ou est en cours, le surplus d'eau est dirigé vers une sortie dédiée du réservoir, notamment vers la cuvette du WC par ladite tubulure de surplus. Ainsi, le débordement de la cuve 2 est empêché.

En variante, la tuyère d'éjection peut être reliée à une surverse de la chasse d'eau, notamment dans le cas d'une cuvette siphonique. Ce montage est notamment connu sous l'expression anglo-saxonne « refill pipe ».

La cartouche amovible 11 est montée à rotation sur l'une des tubulures 6 pour permettre l'écoulement de l'eau dans la cuve 2.

La rotation de la cartouche amovible 11 par rapport à la tubulure de sortie 6 permet d'orienter le flux d'eau de sortie selon une direction précise, par exemple contre une paroi de la cuve 2, cela afin de limiter les nuisances sonores lors du remplissage de la cuve 2.

Selon ce même objectif, la cartouche amovible 11 porte une cage 111 présentant une section d'écoulement d'eau, la cage 111 accueillant un organe poreux 112 présentant une section coïncidant avec la section d'écoulement d'eau, la cage 111 étant située à proximité d'une ouverture de la cartouche amovible 11.

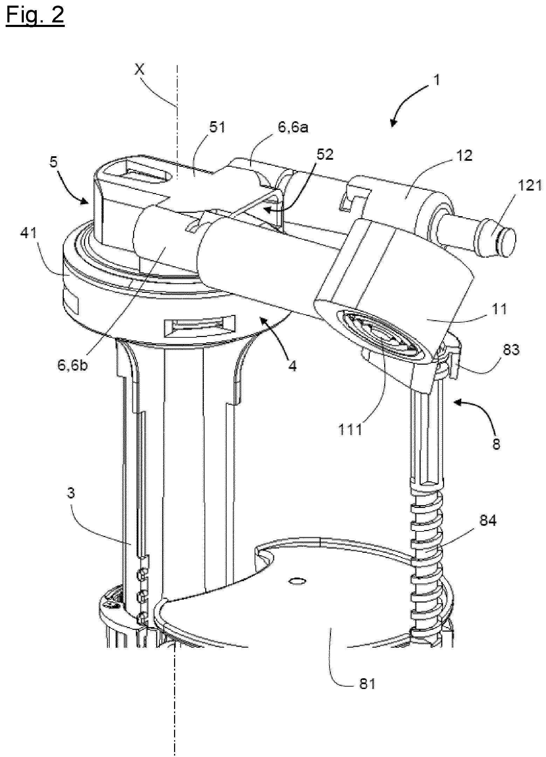

Selon une première forme de réalisation, visible sur les figures 2 et 3, l'organe poreux 112 se présente sous la forme d'une turbine ou d'un aérateur permettant d'intégrer à l'eau de l'air pour canaliser l'écoulement du flux d'eau selon un écoulement cylindrique en sortie de la cartouche amovible 11.

L'injection d'air dans l'eau permet de limiter les nuisances sonores lorsque l'eau entre en contact avec une surface d'eau présente dans la cuve 2, ou avec une paroi de la cuve 2.

Selon une deuxième forme de réalisation illustrée sur la figure 6, l'organe poreux 112 se présente sous la forme d'une mousse permettant de capter l'eau arrivant depuis le corps 3 du robinet 1 pour en réduire son débit en un filet sensiblement constant.

Le filet permet de limiter les nuisances sonores lors de l'entrée en contact une surface d'eau présente dans la cuve 2.

En référence à la figure 4, et selon un premier mode de réalisation, l'eau, pour s'écouler dans la cuve 2, circule dans le corps 3 jusqu'à atteindre la tête 4, puis se dirige vers la tubulure de sortie 6. Ce cheminement de l'eau est illustré notamment par les flèches sur la figure 4 et la figure 6.

Lors de son écoulement dans le robinet 1, l'eau traverse d'abord le corps 3 et ensuite la tête 4, puis remplit le volume d'écoulement d'eau 55 du chapeau 5 avant de prendre place dans les deux tubulures de sortie 6.

La tubulure de sortie qui est obturée par le bouchon d'obturation 12, empêche que l'eau ne s'échappe du robinet 1 et reste donc confinée dans ce dernier.

En revanche, la cartouche amovible 11 permet de guider le flux d'eau et de remplir la cuve 2 du WC.

Au fur et à mesure du remplissage de la cuve 2, le flotteur 81 se déplace et translate le long du corps 3, en direction de la tête 4.

Du fait de la translation du flotteur 81, le bras 83 des moyens d'obturation 8 entraîne l'obturateur 82 dans sa position d'obturation pour diminuer et arrêter l'écoulement d'eau dans le robinet 1.

L'extension des tubulures de sortie 6, transversalement au corps 3, permet de limiter l'encombrement général du robinet 1.

Plus particulièrement, le robinet 1 présente une hauteur restreinte par rapport au robinet de l'art antérieur puisque les tubulures de sortie 6 ne s'étendent pas au-delà de la paroi supérieure 51 du chapeau 5. Tout au plus, tel que cela est illustré sur les figures 4 et 6, la paroi supérieure 51 du chapeau 5 est monobloc avec les tubulures de sortie 6.

En outre, l'extension des tubulures de sortie 6 permet d'éviter un encombrement radial trop important au bénéfice de la compacité du robinet 1.

Par ailleurs, l'extension quasi parallèle des deux tubulures de sortie 6, et l'utilisation d'une cartouche amovible 11 intégrant un organe poreux 112, permettent de limiter et/ou d'orienter la position du robinet 1 dans la cuve 2, cela afin de limiter les nuisances sonores lors du remplissage de la cuve 2.

Selon un mode de réalisation non illustré, le chapeau 5 présente une paroi extérieure qui entoure la zone technique 52 et s'étend dans le prolongement de la paroi périphérique 41 de la tête 4, selon l'axe longitudinal X du corps 3 du robinet 1. Cela permet de créer un volume d'écoulement d'eau 55 de grande capacité.

## Revendications

1. Robinet (1) pour réservoir de chasse d'eau, comprenant :
- un corps (3) s'étendant selon un axe longitudinal (X), destiné à être monté verticalement dans un réservoir de chasse d'eau ;
- une tête (4) prolongeant le corps (3) et présentant une paroi périphérique (41) ;
- un chapeau (5) couvrant la tête (4), le chapeau (5) s'étendant depuis la tête (4) jusqu'à une paroi supérieure (51), et ménageant une zone technique (52) logeant des moyens d'obturation (8) du corps (3);
- une tubulure de sortie (6) débouchant dans le chapeau (5) pour extraire l'eau s'écoulant depuis le corps (3) via la tête (4) et le chapeau (5),
**caractérisé en ce que** ladite zone technique (52) étant délimitée par une paroi interne (53) à la paroi périphérique (41), s'ouvrant sur l'extérieur du chapeau (5), le chapeau (5) ménage un volume d'écoulement d'eau (55) s'étendant entre la paroi périphérique (41), la paroi interne (53) et la paroi supérieure (51), la tubulure de sortie (6) débouchant dans le chapeau (5) à l'intérieur du volume d'écoulement d'eau (55) et s'étendant transversalement à l'axe longitudinal (X).

2. Robinet (1) selon la revendication 1, **caractérisé en ce que** la tubulure de sortie (6) s'étend perpendiculairement à l'axe longitudinal (X).

3. Robinet (1) selon la revendication 1 ou la revendication 2, **caractérisé en ce qu'**il comprend une cartouche amovible (11), montée à une extrémité libre de la tubulure de sortie (6), la cartouche amovible (11) présentant une ouverture d'évacuation d'eau.

4. Robinet (1) selon la revendication précédente, **caractérisé en ce que** la cartouche amovible (11) porte une cage présentant une section d'écoulement d'eau, la cage accueillant un organe poreux présentant une section coïncidente avec la section d'écoulement d'eau, la cage étant située à proximité de l'ouverture de la cartouche.

5. Robinet (1) selon la revendication 3 ou la revendication 4 **caractérisé en ce que** la cartouche amovible (11) est montée à rotation sur la tubulure de sortie (6).

6. Robinet (1) selon l'une quelconque des revendications précédentes, **caractérisé en ce qu'**il comprend une deuxième tubulure de sortie (6,6b) débouchant dans le chapeau (5) à l'intérieur du volume d'écoulement d'eau (55) et s'étendant transversalement à l'axe longitudinal (X).

7. Robinet (1) selon la revendication précédente, **caractérisé en ce qu'**il comprend un bouchon d'obturation (12) obturant une extrémité libre de la deuxième tubulure de sortie (6,6b).

8. Robinet (1) selon l'une des revendications 6 ou 7, **caractérisé en ce que**, la zone technique (52) s'ouvre sur l'extérieur du chapeau (5) entre les deux tubulures de sortie (6 ;6a,6b).

9. Robinet (1) selon la revendication 7, **caractérisé en ce que** le bouchon d'obturation (12) porte une tuyère d'éjection d'eau (121) hors du réservoir de chasse d'eau.

10. Robinet (1) selon l'une quelconque des revendications précédentes, **caractérisé en ce que** les moyens d'obturation (8) comprennent un bras (83) monté à rotation par rapport à la paroi interne (53) dans la zone technique (52), et s'étendant à l'extérieur du chapeau (5), le bras (83) étant solidaire d'un flotteur (81).

## Patentansprüche

1. Hahn (1) für einen Spülkasten, umfassend:
- einen sich entlang einer Längsachse (X) erstreckenden Körper (3), der dazu bestimmt ist, vertikal in einem Spülkasten angebracht zu werden;
- einen Kopf (4), der den Körper (3) verlängert und eine Umfangswand (41) aufweist;
- eine Kappe (5), die den Kopf (4) bedeckt, wobei sich die Kappe (5) vom Kopf (4) bis zu einer oberen Wand (51) erstreckt und einen technischen Bereich (52) ausbildet, der Mittel (8) zum Verschließen des Körpers (3) aufnimmt;
- einen Auslassstutzen (6), der in die Kappe (5) mündet, um das Wasser, das vom Körper (3) über den Kopf (4) und die Kappe (5) abfließt, auszuleiten,
**dadurch gekennzeichnet, dass** wobei der technische Bereich (52) von einer Innenwand (53) zur Umfangswand (41) begrenzt wird, die sich zur Außenseite der Kappe (5) öffnet, die Kappe (5) ein Volumen (55) für den Abfluss von Wasser ausbildet, das sich zwischen der Umfangswand (41), der Innenwand (53) und der oberen Wand (51) erstreckt, wobei der Auslassstutzen (6) im Inneren des Wasserabflussvolumens (55) in die Kappe (5) mündet und sich quer zur Längsachse (X) erstreckt.

2. Hahn (1) nach Anspruch 1, **dadurch gekennzeichnet, dass** sich der Auslassstutzen (6) senkrecht zur Längsachse (X) erstreckt.

3. Hahn (1) nach Anspruch 1 oder Anspruch 2, **dadurch gekennzeichnet, dass** er eine abnehmbare Kartusche (11) umfasst, die an einem freien Ende des Auslassstutzens (6) angebracht ist, wobei die abnehmbare Kartusche (11) eine Wasserablauföffnung aufweist.

4. Hahn (1) nach dem vorstehenden Anspruch, **dadurch gekennzeichnet, dass** die abnehmbare Kartusche (11) einen Käfig trägt, der einen Wasserabflussabschnitt aufweist, wobei der Käfig ein poröses Organ aufnimmt, das einen Abschnitt aufweist, der mit dem Wasserabflussabschnitt deckungsgleich ist, wobei sich der Käfig in der Nähe der Öffnung der Kartusche befindet.

5. Hahn (1) nach Anspruch 3 oder Anspruch 4, **dadurch gekennzeichnet, dass** die abnehmbare Kartusche (11) drehbar auf dem Auslassstutzen (6) angebracht ist.

6. Hahn (1) nach einem der vorstehenden Ansprüche, **dadurch gekennzeichnet, dass** er einen zweiten Auslassstutzen (6, 6b) umfasst, der im Inneren des Wasserabflussvolumens (55) in die Kappe (5) mündet und sich quer zur Längsachse (X) erstreckt.

7. Hahn (1) nach dem vorstehenden Anspruch, **dadurch gekennzeichnet, dass** er einen Verschlussstopfen (12) umfasst, der ein freies Ende des zweiten Auslassstutzens (6, 6b) verschließt.

8. Hahn (1) nach einem der Ansprüche 6 oder 7, **dadurch gekennzeichnet, dass** sich der technische Bereich (52) zwischen den zwei Auslassstutzen (6; 6a, 6b) zur Außenseite der Kappe (5) öffnet.

9. Hahn (1) nach Anspruch 7, **dadurch gekennzeichnet, dass** der Verschlussstopfen (12) eine Düse (121) zum Ausstoßen von Wasser aus dem Spülkasten trägt.

10. Hahn (1) nach einem der vorstehenden Ansprüche, **dadurch gekennzeichnet, dass** die Verschlussmittel (8) einen Arm (83) umfassen, der in Bezug auf die Innenwand (53) drehbar im technischen Bereich (52) angebracht ist und sich zur Außenseite der Kappe (5) erstreckt, wobei der Arm (83) fest mit einem Schwimmer (81) verbunden ist.

## Claims

1. A valve (1) for a water flushing tank, comprising:
- a body (3) extending according to a longitudinal axis (X), intended to be mounted vertically in a water flushing tank;
- a head (4) prolonging the body (3) and having a peripheral wall (41);
- a cap (5) covering the head (4), the cap (5) extending from the head (4) up to an upper wall (51), and forming a technical area (52) housing sealing means (8) of the body (3) ;
- an outlet tubing (6) opening into the cap (5) to extract the water flowing from the body (3) via the head (4) and the cap (5),
**characterised in that**, said technical area (52) being delimited by a wall (53) internal to the peripheral wall (41), opening onto the outside of the cap (5), the cap (5) forms a water flow volume (55) extending between the peripheral wall (41), the inner wall (53) and the upper wall (51), the outlet tubing (6) opening into the cap (5) inside the water flow volume (55) and extending transversely to the longitudinal axis (X).

2. The valve (1) according to claim 1, **characterised in that** the outlet tubing (6) extending perpendicularly to the longitudinal axis (X).

3. The valve (1) according to claim 1 or claim 2, **characterised in that** it comprises a removable cartridge (11), mounted at a free end of the outlet tubing (6), the removable cartridge (11) having a water discharge opening.

4. The valve (1) according to the preceding claim, **characterised in that** the removable cartridge (11) carries a cage having a water flow section, the cage accommodating a porous member having a section coincident with the water flow section, the cage being located proximate to the opening of the cartridge.

5. The valve (1) according to claim 3 or claim 4, **characterised in that** the removable cartridge (11) is rotatably mounted on the outlet tubing (6).

6. The valve (1) according to any one of the preceding claims, **characterised in that** it comprises a second outlet tubing (6, 6b) opening into the cap (5) inside the water flow volume (55) and extending transversely to the longitudinal axis (X).

7. The valve (1) according to the preceding claim, **characterised in that** it comprises a sealing plug (12) sealing a free end of the second outlet tubing (6, 6b).

8. The valve (1) according to one of claims 6 or 7, **characterised in that** the technical area (52) opens onto the outside of the cap (5) between the two outlet tubings (6; 6a, 6b).

9. The valve (1) according to claim 7, **characterised in that** the sealing plug (12) carries a nozzle (121) for ejecting water out of the water flushing tank.

10. The valve (1) according to any one of the preceding claims, **characterised in that** the sealing means (8) comprises an arm (83) rotatably mounted relative to the inner wall (53) in the technical area (52), and extending outside the cap (5), the arm (83) being secured to a float (81) .
